# EUROPÄISCHE PATENTSCHRIFT

(11) **EP 2 544 883 B1**
(45) Veröffentlichungstag und Bekanntmachung des Hinweises auf die Patenterteilung: **08.07.2020**
(21) Anmeldenummer: 11708733.8
(22) Anmeldetag: 10.03.2011
(51) Int. Cl.: B29C 71/00, B65G 47/244

(54) **VERWENDUNG EINER VORRICHTUNG ZUR REDUZIERUNG DER HAFTEIGENSCHAFTEN VON FRISCH BLASGEFORMTEN BEHÄLTERN**
USE OF AN APPARATUS FOR REDUCING ADHESIVE PROPERTIES OF RECENTLY BLOW-MOULDED CONTAINERS
UTILISATION D'UN APPAREIL POUR RÉDUIRE L'ADHÉRENCE DE CONTENANTS FRAÎCHEMENT MOULÉS PAR SOUFFLAGE

(30) Priorität: 10.05.2010 DE 102010028814; 10.03.2010 DE 102010011048
(43) Veröffentlichungstag der Anmeldung: 16.01.2013
(73) Patentinhaber: Krones AG, 93073 Neutraubling (DE)
(72) Erfinder: HÜTTNER, Johann, 84066 Mallersdorf-Pfaffenberg (DE); SEGER, Martin, 92318 Neumarkt i.d.Opf. (DE); ASBRAND, Helmut, 93077 Bad Abbach (DE); HAIDACHER, Peter, 83088 Kefersfelden (DE); LÖSCH, Christian, 92237 Sulzbach-Rosenberg (DE)
(74) Vertreter: Grünecker Patent- und Rechtsanwälte PartG mbB
(86) Internationale Anmeldenummer: PCT/EP2011/001197
(87) Internationale Veröffentlichungsnummer: WO 2011/110358

(56) Entgegenhaltungen:
- EP-A1- 1 813 422
- WO-A1-02/083391
- DE-A1- 10 351 249
- DE-A1-102006 049 134
- DE-U1- 29 617 281
- US-A- 5 419 866
- US-A- 5 441 678
- US-A1- 2007 163 212

## Beschreibung

Die vorliegende Erfindung betrifft ein Verfahren und eine Vorrichtung zur Behandlung von Behältern.

### Stand der Technik

Frisch produzierte, insbesondere nach dem Blasformen noch warme Kunststoffflaschen, die einer weiteren Vorrichtung, beispielsweise einem Packer in einem ungeordneten Strom zugeführt werden, kleben häufig aneinander. Dies verursacht erhebliche Probleme bei der weiteren Verarbeitung, da die Flaschen erst voneinander getrennt werden müssen, um einzeln den weiteren Bearbeitungsvorrichtungen zugeführt zu werden.

Ein Grund hierfür liegt möglicherweise darin, dass der Kunststoff der noch warmen gerade geformten Behälter sich noch nicht komplett im festen Zustand befindet und somit ein leicht lösbares Verschmelzen der obersten Oberflächenschicht benachbarter Behälter stattfindet. Dies könnte beispielsweise verhindert werden, indem die gerade geformten Behälter abgekühlt werden. Problematisch ist hierbei, dass die Verwendung von einer Kühlung die entsprechende Maschine vergrößert, komplexer und wartungsanfälliger macht.

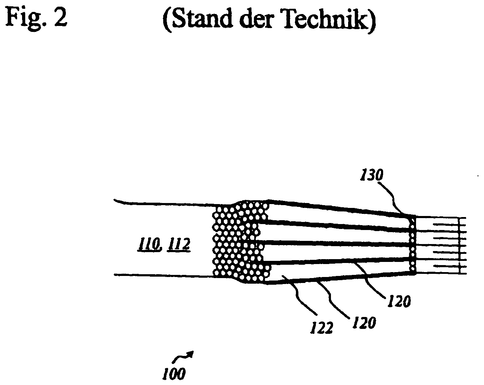

Die Vereinzelung der blasgeformten Behälter findet im Zulauf bzw. im Einlauf der weiterverarbeitenden Maschinen statt. Beim Zulauf in einen Packer werden die Flaschen beispielsweise in Gassen gedrängelt (vgl. auch Figur 2). Die Flaschen berühren die Führungsgeländer und sich selbst untereinander. Ist dabei die Reibwirkung durch das Kleben zu groß, kommt es zu Verklemmungen und damit zu einer Störung des Ablaufs. Die Maschine stoppt und der Bediener muss eingreifen.

DE 23 30 773 A1 beschreibt eine Vorrichtung zur Übergabe von Hohlkörpern. Diese weist seitliche Führungen der Transportbahn auf, die mit Bürsten bestückt sind. Die Bürsten verhindern ein Umkippen der Hohlkörper und bremsen gleichzeitig deren Fall ab.

DE 92 12 731 U1 beschreibt eine Transportvorrichtung für Gefäße mit einer Ausstoßfunktion für zu dicke Gefäße. Das Ausleiten dieser ungewünschten Gefäße erfolgt über mit Bürsten versehene Leitelemente.

US5441678A offenbart eine Vorrichtung zur Behandlung eines aus Kunststoff blasgeformten Behälters, wobei der Behälter mindestens eine Standfläche und eine Mantelfläche aufweist, wobei die Mantelfläche zumindest teilweise parallel zu einer Längsachse des Behälters angeordnet ist, die senkrecht zur Standfläche ist, und wobei die Mantelfläche mindestens eine Kontaktfläche aufweist und wobei die Kontaktflächen zweier Behälter bei einer kompakten, berührenden Anordnung der Behältern nebeneinander zumindest teilweise miteinander in Berührung kommen; wobei die Vorrichtung wenigstens ein Wirkmittel zur Veränderung der physikalischen Oberflächeneigenschaften der Kontaktflächen des Behälters aufweist.

Aufgabe der Erfindung ist es, die Hafteigenschaften von frisch blasgeformten Behältern zu reduzieren.

Die obige Aufgabe wird durch den Gegenstand des Anspruchs 1 gelöst. Weitere vorteilhafte Ausgestaltungen werden durch die Unteransprüche beschrieben.

### Beschreibung

Die Offenbarung betrifft ein Verfahren zur Behandlung eines aus Kunststoff blasgeformten Behälters. Insbesondere betrifft das Verfahren die Behandlung von aus PET geformten Flaschen.

Die Behälter werden mit Hilfe eines Transportmittels, beispielsweise über einen Förderer, von der Blasformmaschine zu einer weiterverarbeitenden Vorrichtung, insbesondere einer Etikettiermaschine, einem Füller, einem Packer etc. transportiert. Die Behälter können auch jeweils einzeln an Greifern gehalten und transportiert werden etc.

Die Behälter weisen jeweils mindestens eine Standfläche und eine Mantelfläche auf. Die Mantelfläche ist zumindest teilweise parallel zu einer Längsachse angeordnet, die senkrecht zur Standfläche angeordnet ist.

Die Mantelfläche weist mindestens eine Kontaktfläche auf. Werden Behälter bzw. Flaschen in einem dichten Strom von der Blasformmaschine einer weiterverarbeitenden Vorrichtung zugeführt, berühren die Kontaktflächen die Führungsgeländer sowie die Flaschen sich untereinander. Bei einer solchen Berührung tendieren die Behälter dazu, haften zu bleiben (siehe auch **Figur 2**).

Die Kontaktflächen der Behälter werden nach dem Blasformen und vor dem Zuführen zu weiterverarbeitenden Vorrichtungen zumindest teilweise mit einem Wirkmittel beaufschlagt. Dabei werden physikalische Eigenschaften der Kontaktflächen der Behälters so verändert, dass unerwünschten Klebeeigenschaften der Behälter reduziert werden. Insbesondere können physikalische Eigenschaften der Kontaktflächen des Behälters durch mechanische Einwirkung des Wirkmittels auf die Kontaktflächen verändert werden.

Beispielsweise kann es sein, dass der Kunststoff der noch warmen Behälter noch nicht vollständig verfestigt ist, so dass die Behälter aufgrund einer noch teilweise flüssigen Beschaffenheit der Oberfläche aneinander kleben.

Weiterhin besteht die Möglichkeit, dass die Endvernetzung im Kunststoff noch nicht vollständig abgeschlossen ist, und sich dadurch Querverbindungen zwischen einander berührenden Behältern ausbilden.

Möglicherweise sind die frisch blasgeformten Flaschen auch elektrostatisch aufgeladen und der Kontakt mit dem geerdeten Wirkmittel bewirkt ein Ableiten dieser elektrostatischen Kräfte.

Gemäß einer bevorzugten Ausführungsform ist das wenigstens eine Wirkmittel parallel zur Längsachse der behandelten Behälter angeordnet und erstreckt sich weitgehend über die gesamte Höhe des behandelten Behälters oder vorzugsweise nur im Bereich der Kontaktflächen der Behälter.

Gemäß einer Ausführungsform nicht gemäß der Erfindung ist das Wirkmittel eine Wirkfläche an der die Kontaktflächen des Behälters weitgehend vollständig abgewälzt werden. Der Kontakt zwischen Wirkmittel und Behälter ist dabei so sanft, dass kein Verkratzen der Oberfläche der Behälter erfolgt.

Gemäß einer weiteren Ausführungsform ist das Wirkmittel wenigstens eine Bürste an der die Kontaktflächen des Behälters weitgehend vollständig abgewälzt werden. Die Kontaktflächen der Behälter werden vorzugsweise im gesamten Umfang der Mantelfläche mit dem Wirkmittel beaufschlagt. Um dies zu gewährleisten weist die Vorrichtung Drehmittel auf, die eine Rotation der Behälter um ihre Längsachse bewirken, so dass die Flaschen um ihre Längsachse rotieren. Dadurch kommt die Flasche in ihrem gesamten Umfang mit der Wirkfläche in Kontakt, so dass die physikalischen Eigenschaften im gesamten Umfang des Behälters verändert werden.

Bei dem Drehmittel kann es sich beispielsweise um ein Endlosförderband handeln, das über zwei Umlenkrollen geführt ist, wobei die Drehachsen der Umlenkrollen parallel zu den Längsachsen der transportierten und behandelten Behälter angeordnet sind. Durch die Bewegung des Endlosförderbands werden die Behälter in eine Rotation um ihre Längsachse versetzt. Dies wiederum bewirkt, dass die mindestens eine Kontaktfläche des Behälters an dem senkrecht zu der Längsachse des Behälters angeordneten Wirkmittel vorbei rotieren.

Gemäß einer weiteren Ausführungsform ist das Drehmittel eine Förderschnecke. Die Behälter sind beispielsweise in den so genannten Wellentälern der Förderschnecke angeordnet. Durch Drehbewegung der Förderschnecke werden die Behälter in Rotation versetzt, so dass sie ebenfalls über ihren gesamten Umfang in Kontakt mit dem Wirkmittel treten.

Andere Mittel, die Behälter in eine Drehung zu versetzen sollen von der Offenbarung ebenfalls umfasst sein. Gemäß einer weiteren Ausführungsform ist es zudem denkbar, dass das Wirkmittel jeweils um die Behälter herum rotiert, so dass diese wiederum in ihrem gesamten Umfang mit dem Wirkmittel in Kontakt treten.

In einer weiteren vorteilhaften Ausgestaltung des Verfahrens bzw. der Vorrichtung ist vorgesehen, dass die Behälter zwischen zwei Endlosförderbändern eingeklemmt und auf ihrem Transportweg durch einen mit unterschiedlicher Geschwindigkeit erfolgenden Antrieb der Endlosförderbänder in Drehung versetzt werden. Das hat den Vorteil, dass die Geschwindigkeitsänderung, die die Behälter, gegenüber einer Lösung, bei der mit einem Endlosförderband gegenüber eine feststehende Fläche gedreht wird, erfahren, geringer sind und deshalb ohne Stabilitätsprobleme zu bekommen ein und auslaufen können.

Gemäß einer weiteren Ausführungsform ist die Vorrichtung nicht zwischen eine Blasformmaschine und einer weiterführende Verarbeitungsvorrichtung integriert. Stattdessen stellt die Vorrichtung einen integrierten Bestandteil der Blasformmaschine nach dem Blasformmodul dar. Oder aber die Vorrichtung ist direkt in die weiterführende Verarbeitungsvorrichtung integriert. Beispielsweise kann die Vorrichtung in eine Etikettiervorrichtung vor dem ersten Etikettieraggregat integriert werden.

Die Vorrichtung und das Verfahren wurden aufgrund der Beobachtung entwickelt, dass Flaschen, die schon einige Umläufe in Versuchsaufbauten o.ä. hinter sich hatten, die ungewünschten Klebeeigenschaften nicht mehr aufweisen. Die Vorrichtung und das Verfahren dienen dazu, durch künstliche Berührung, insbesondere durch Abwälzen der Flaschen an einer glatten Fläche oder an Bürsten, diesen Effekt im Anschluss an das Blasformen der Flaschen nachzustellen, bevor diese weiteren Verarbeitungsmaschinen, insbesondere einem Packer o. ä. zugeführt werden.

### Figurenbechreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt schematische Darstellungen von mittels einer Vorrichtung zu behandelnden Behältern (Stand der Technik).
Figur 2 zeigt die Zufuhr von blasgeformten Flaschen zu einer weiterverarbeitenden Packvorrichtung.
Figur 3 zeigt eine schematische Ansicht einer ersten Ausführungsform einer Vorrichtung.
Figur 4 zeigt eine zweite Ausführungsform einer Vorrichtung.
Figur 5 zeigt eine dritte Ausführungsform einer Vorrichtung.
Figur 6 zeigt eine schematische Draufsicht auf ein weiteres Ausführungsbeispiel der Vorrichtung.
Figur 7 zeigt eine perspektivische Darstellung auf die in Figur 6 nur schematisch dargestellte Vorrichtung, wobei zum besseren Verständnis das Band 153 auf der einen Seite der Transportstrecke nicht dargestellt ist.
Figur 8 zeigt eine weitere Ausführungsform der Vorrichtung.

Für gleiche oder gleich wirkende Elemente werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Vorrichtung oder das Verfahren ausgestaltet sein können und stellen keine abschließende Begrenzung dar.

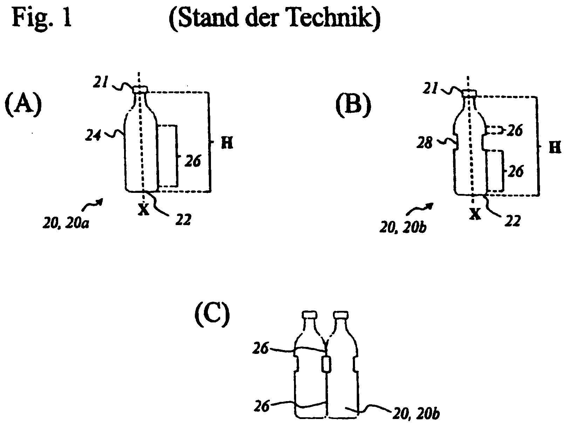

**Figur 1** zeigt schematische Darstellungen von mittels einer Vorrichtung zu behandelnden Behältern (Stand der Technik). Bei den zu behandelnden Behältern handelt es sich um Flaschen 20, insbesondere um Flaschen 20a ohne Griffmulde (**Fig. 1A**) bzw. Flaschen 20b mit Griffmulde 28 (**Fig. 1B**).

Die Flaschen 20, 20a, 20b weisen einen Deckel 21, eine Standfläche 22 und eine Mantelfläche 24 über eine Höhe H auf. Die Mantelfläche 24 ist parallel zu einer Längsachse X angeordnet ist, die senkrecht zur Standfläche 22 ist. Die Mantelfläche 24 weist Kontaktflächen 26 auf. Bei den Kontaktflächen 26 handelt es sich um Flächen, an denen sich zwei direkt nebeneinander angeordnete Flaschen 20, 20b zumindest teilweise berühren (**Fig. 1C**).

**Figur 2** zeigt den Zulauf 100 über den blasgeformte Flaschen 20 von der Streckblasmaschine beispielsweise zu einer weiterverarbeitenden Packvorrichtung transportiert werden. Die aus der Streckblasvorrichtung kommenden Flaschen 20 werden über eine Transportvorrichtung 110, beispielsweise einem Förderer 112 in Richtung Packer transportiert und über Führungsbleche 120 in Gassen 122 gedrängelt und in Gruppen gewünschter Größe abgeteilt. Im gezeigten Ausführungsbeispiel werden Zweiergruppen 130 von Flaschen 20 erstellt.

Die Flaschen 20 berühren die Führungsgeländer 120 und sich selbst untereinander. Ist dabei die Reibwirkung durch das Kleben zu groß, kommt es zu Verklemmungen und damit zu einer Störung im Zulauf 100 und in der weiterverarbeitenden Vorrichtung.

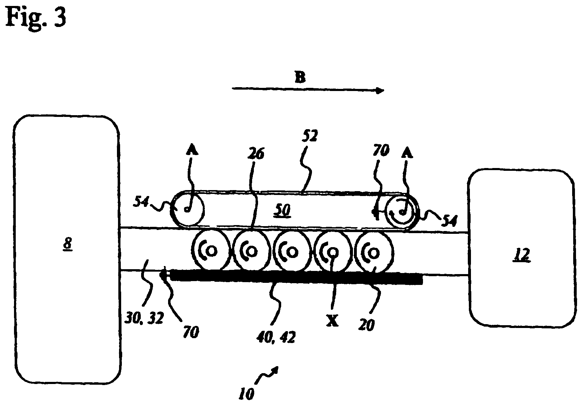

**Figur 3** zeigt eine schematische Darstellung einer ersten Ausführungsform einer Vorrichtung 10 zur Behandlung von Behältern, insbesondere Flaschen 20, insbesondere aus PET. Die Vorrichtung 10 ist vorzugsweise zwischen einer Blasmaschine 8 für Behälter aus Kunststoff und einer weiterverarbeitenden Vorrichtung 12 angeordnet.

Die Flaschen 20 werden auf einem Transportmittel 30, insbesondere einem Endlosförderer 32 in Bewegungsrichtung B entlang eines Wirkmittels 40, insbesondere entlang einer Wirkfläche 42 transportiert. Durch die Berührung zwischen Flasche 20 und Wirkfläche 42 zumindest im Bereich der Kontaktflächen 26 der Flasche 20 werden die physikalischen Eigenschaften der Oberfläche der Flasche 20 in den Berührungsbereichen so verändert, dass mehrere Flaschen 20 beispielsweise beim Einlauf in einen nachfolgenden Packer o. ä. nicht mehr aneinander kleben.

Die Vorrichtung weist weiterhin Drehmittel 50 auf, d.h. Mittel, die die Flaschen 20 in eine Drehung versetzen, so dass diese um ihre Längs- und Drehachse X rotieren. Dadurch kommt die Flasche 20 in ihrem gesamten Umfang mit der Wirkfläche 42 in Kontakt, so dass die physikalischen Eigenschaften im gesamten Umfang der Flasche 20 verändert werden. Insbesondere werden die klebrigen Hafteigenschaften allumfassend reduziert.

Gemäß der dargestellten Ausführungsform handelt es sich bei dem Drehmittel 50 um ein um zwei Umlenkrollen 54 geführtes Endlosförderband 52, wobei die Drehachsen A der Umlenkrollen 54 parallel zur Längs- und Drehachse X der zu behandelnden Flaschen 20 angeordnet sind. Bei der Wirkfläche 42 handelt es sich beispielsweise um eine Fläche aus poliertem Edelstahl, um ein Niro- Blech oder um ein anderes geeignetes, insbesondere um ein anderes geeignetes leitfähiges Material.

Sowohl das Drehmittel 50 als auch die Wirkfläche 42 sind jeweils über eine Erdung 70 geerdet, um eine elektrostatische Aufladung der Flaschen 20 zu verhindern, da elektrostatisch aufgeladene PET- Flaschen 20 ebenfalls besonders gut aneinander kleben.

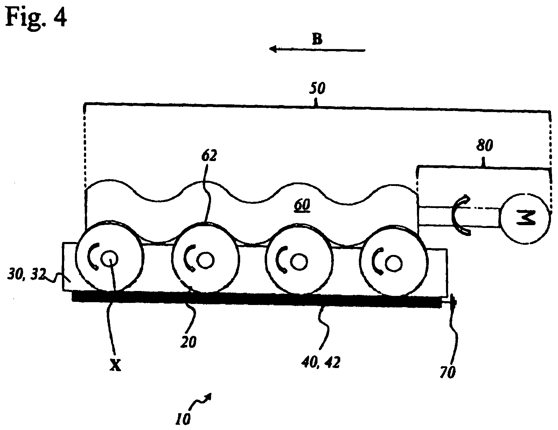

**Figur 4** zeigt eine zweite Ausführungsform einer Vorrichtung 10. Hierbei findet als Drehmittel 50 eine Förderschnecke 60 Verwendung, in deren Wellentäler 62 die Flaschen 20 formschlüssig eingreifen. Die Förderschnecke 60 wird mit Hilfe einer Bewegungsvorrichtung 80 beispielsweise mit einem Motor M gedreht, so dass die Flaschen ebenfalls um ihre Längsachse X rotieren und somit über ihren gesamten Umfang in Kontakt mit der Wirkfläche 42 treten.

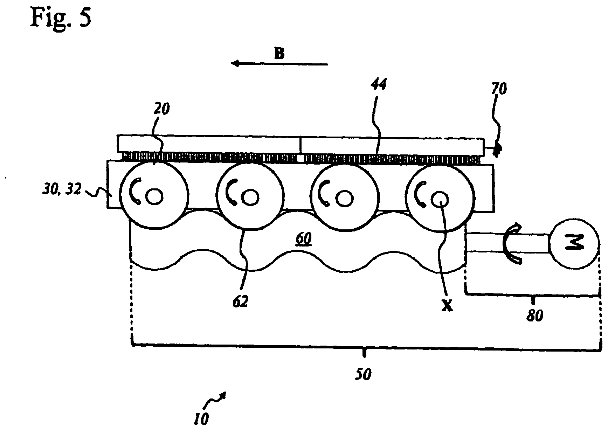

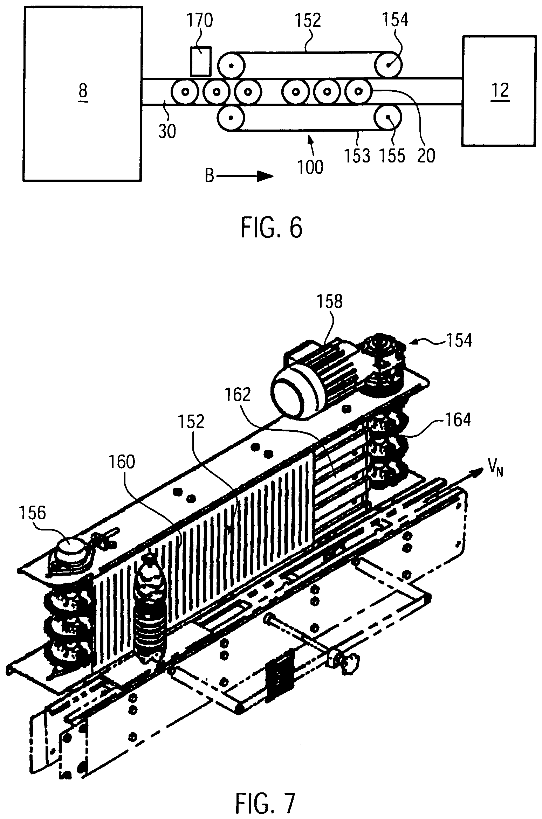

**Figur 5** zeigt eine dritte Ausführungsform einer Vorrichtung. Hierbei findet ein Wirkmittel in Form von Bürsten 44 Verwendung. Die Bürsten 44 sind ebenfalls flächig angeordnet und erstrecken sich weitgehend über die gesamte Höhe H der Mantelfläche 24 der Flaschen 20, so dass die Kontaktflächen 26 allumfassend mit den Bürsten 44 in Kontakt treten. Wie **Figur 6** in einer Draufsicht zeigt, ist bei einem weiteren Ausführungsbeispiel vorgesehen, dass die Behälter 20 auf ihrem Transportweg von zwei seitlich angreifenden Endlosförderbändern 152 und 153 ergriffen werden. Die beiden Endlosförderbänder 152 und 153 werden mit unterschiedlichen Geschwindigkeiten angetrieben, so dass die Flaschen in Drehung versetzt werden. Dadurch wälzen sich die Flaschen zwischen den beiden Endlosbändern ab, die damit als Wirkmittel im Sinne der Offenbarung auf die Flaschen einwirken. Als Material für die Endlosbänder kommen diverse Kunststoffe, aber auch PVC, Niro oder auf Acetal- oder Polyamidbasis hergestellte Endlosbänder in Frage, so dass eine harte und glatte Oberfläche gebildet wird. Auch kann im Einlaufbereich eine spezielle Behandlung der Flaschen erfolgen, beispielsweise durch Bürsten oder Schwämme oder aber auch durch Düsenstöcke für Reinigungsmittel. Ebenso können diese Behandlungsvorrichtungen auf die Förderfläche der Endlosförderer 152 und 153 gerichtet sein. Damit wird eine Reinigung der Förderflächen von Polymerketten oder sonstigen Rückständen bewirkt, welche durch Anlagerung von beispielsweise der nicht vollständig vernetzten Kunststoffoberflächen der Behälter eine glättende Wirkung hemmen würde. Entsprechende Vorrichtungen haben wir in der Figur 6 pauschal mit dem Bezugszeichen 170 versehen.

Eine detailliertere Ausgestaltung der Vorrichtung der Figur 6 ist in der **Figur 7** dargestellt, wobei aber nur eine Seite, nämlich die des Endlosförderbandes 152 gezeigt ist. Das Förderband ist in der Form einer Förderfläche aus einzelnen Lamellen 160 gebildet, die aneinander hängen, und um die Umlenkrollen 154 bzw. 156 endlos umlaufend angetrieben werden. Über den Motor 158 kann die Umlaufgeschwindigkeit variabel eingestellt werden. Eine entsprechende Anordnung findet sich auf der gegenüberliegenden Seite, wobei die dann zwei Motoren unabhängig voneinander mit unterschiedlicher Geschwindigkeit laufen können, so dass die Endlosförderbänder 152 und 153 mit unterschiedlichen Geschwindigkeiten umlaufen können, was dann zu einer Drehung der dazwischen eingeklemmten Flaschen führt. Vorzugsweise bewegt sich dabei ein Endlosförderer etwas langsamer und der gegenüberliegende Endlosförderer etwas schneller als eine nominelle Fördergeschwindigkeit V_{N} der Behälter 20 in der Bewegungsrichtung B, so dass sich die Fördergeschwindigkeit V_{N} aus dem Zusammenwirken, beispielsweise aus einer Mittelung der Fördergeschwindigkeiten der Endlosförderbänder 152, 153 ergibt. Vorzugsweise ist die Geschwindigkeitsdifferenz zwischen den Endlosförderbändern 152, 153 in der Bewegungsrichtung B so eingestellt, dass die Behälter 20 während des Kontakts mit den Endlosförderbändern 152, 153 wenigstens eine vollständige Umdrehung um ihre Längsachse X ausführen. Um eine ausreichende Andrückkraft sicherzustellen, sind hinter den Lamellen 160 Abstützflächen 162, bevorzugt über die gesamte Höhe angeordnet, so dass die Lamellen ohne nach hinten nachzugeben, mit einem bestimmten Druck auf die Flaschen einwirken können.

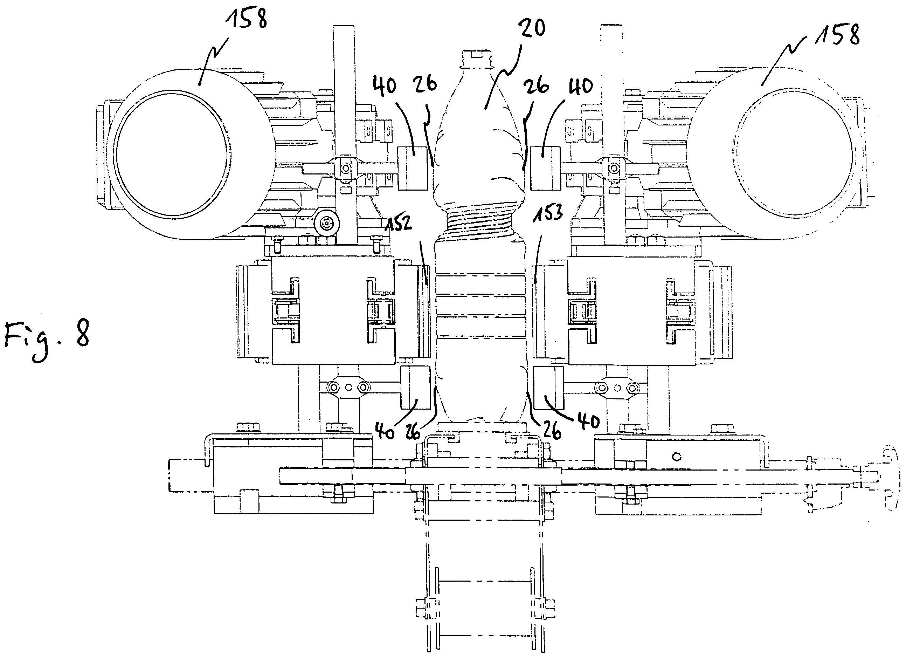

Eine Abwandlung der Ausführungsform nach Figuren 6 und 7 ist als weitere Ausführungsform in **Figur 8** dargestellt. Gleichermaßen wie in der zuvor beschriebenen Ausführungsform werden auch in dieser Ausführungsform die Behälter 20 auf ihrem Transportweg von zwei seitlich angreifenden Endlosförderbändern 152 und 153 ergriffen und auf Grund der unterschiedlichen durch den jeweiligen Motor 158 bewirkten Geschwindigkeiten in Drehung versetzt und gleichzeitig befördert. Der Unterschied besteht nunmehr darin, dass wenigstens ein Wirkmittel 40 vorgesehen ist, welches vorzugsweise paarweise, beidseitig von den Behältern angeordnet ist und verschieden von den Endlosförderbändern 152, 153 ist, wobei das Wirkmittel 40 sich nicht bewegt sondern eine fixierter Bestandteil der Vorrichtung ist. Die Behälter 20 bewegen sich im Betrieb entlang der Förderichtung an dem Wirkmittel 40 vorbei und drehen sich dabei, wodurch Kontaktflächen 26 der Behälter 20 an dem Wirkmittel 40 vorbeistreifen. Insbesondere können - wie in Figur 8 abgebildet - zwei Paare von Wirkmitteln 40 vorgesehen sein, um auf diese Weise auf eine obere und eine untere Kontaktfläche 26 einzuwirken. Die Wechselwirkung der Kontaktflächen 26 mit dem Wirkmittel 40 bewirkt, dass die Kontaktflächen 26 auf mechanische Weise behandelt werden, insbesondere mechanisch geglättet werden und / oder überschüssiges Behältermaterial abgestreift wird.

Wie bereits im Zusammenhang mit der zuvor beschriebenen Ausführungsform genannt, können auch in dieser Ausführungsform Düsen für Reinigungsmittel vorgesehen sein, um die Reinigung der Behälter 20 von Rückständen weiter zu verbessern. Ebenso können Düsen genutzt werden, um gezielt vorzugsweise im Einlaufbereich der Vorrichtung ein Antihaftmittel beispielsweise auf der Basis von Silikon auf die Behälter 20 aufzubringen und durch die Wirkmittel 40 gleichmäßig auf den Kontaktflächen der Behälter zu verteilen.

Die/Das Wirkmittel 40 sind/ist beispielsweise dreiteilig aufgebaut. Auf einer ersten Trägerschicht, z.B. einen Kunststoffstreifen oder Metallstreifen vorzugsweise aus rostfreien Edelstahl, befindet sich als mittlere Schicht ein elastisches Material. Dieses Material kann aus einen weichen Gummi oder ähnliches bestehen, besonders vorzugsweise wird ein Schwamm eingesetzt, der je nach Behälterkontur verschieden Härten aufweisen kann. Dadurch erreicht man eine optimale Anpassung der Wirkmittel 40 an die Kontaktflächen. Um die mittlere Schicht vor zu hohen Abrieb zu schützen, liegt eine dünne dritte Schicht davor. Diese Schicht zeichnet sich durch eine glatte Oberfläche aus, um die Behälter 20 nicht zu verkratzen. Besonders geeignet dafür sind Textilbänder, Lederstreifen oder ganz besonders ein Teflonband.

Die Erfindung wurde unter Bezugnahme auf bevorzugte Ausführungsformen beschrieben.

### Bezugszeichenliste:

- 8: Blasmaschine
- 10: Vorrichtung zur Behandlung von Behältern
- 12: Weiterverarbeitende Vorrichtung
- 20: Flasche
- 20a: Flasche
- 20b: Flasche
- 21: Deckel
- 22: Standfläche
- 24: Mantelfläche
- 26: Kontaktflächen
- 28: Griffmulde
- 30: Transportmittel
- 32: Endlosförderer
- 40: Wirkmittel
- 42: Wirkfläche
- 44: Bürste
- 50: Drehmittel
- 52: Endlosförderband
- 54: Umlenkrolle
- 60: Förderschnecke
- 62: Wellentäler
- 70: Erdung
- 80: Bewegungsvorrichtung
- 100: Zulauf
- 110: Transportvorrichtung
- 112: Förderer
- 120: Führungsblech / Führungsgeländer
- 122: Gasse
- 130: Zweiergruppe / Anordnung aus zwei Flaschen
- 152: Endlosförderband
- 153: Endlosförderband
- 154: Umlenkrolle
- 155: Umlenkrolle
- 160: Lamellen
- 162: Abstützfläche
- 164: Kettenantrieb
- 170: Düsenstöcke
- A: Drehachse
- B: Bewegungsrichtung
- H: Höhe
- M: Motor
- X: Längsachse
- V_{N}: Fördergeschwindigkeit

## Patentansprüche

1. Verwendung einer Vorrichtung zur Behandlung eines aus Kunststoff blasgeformten Behälters (20, 20a, 20b), um unerwünschte Klebeeigenschaften von Kontaktflächen des Behälters zu reduzieren,
wobei der Behälter mindestens eine Standfläche (22) und eine Mantelfläche (24) aufweist, wobei die Mantelfläche (24) zumindest teilweise parallel zu einer Längsachse (X) des Behälters (20, 20a, 20b) angeordnet ist, die senkrecht zur Standfläche (22) ist, und wobei die Mantelfläche (24) mindestens eine Kontaktfläche (26) aufweist und wobei die Kontaktflächen (26) zweier Behälter bei einer kompakten, berührenden Anordnung der Behältern (20, 20a, 20b) nebeneinander zumindest teilweise miteinander in Berührung kommen;
wobei die Vorrichtung (10, 100) wenigstens ein Wirkmittel (40) zur Veränderung der physikalischen Oberflächeneigenschaften der Kontaktflächen (26) des Behälters (20, 20a, 20b) aufweist, wobei physikalische Eigenschaften der Kontaktflächen (26) des Behälters (20, 20a, 20b) durch mechanische Einwirkung des Wirkmittels auf die Kontaktflächen (26) verändert werden, so dass klebrige Hafteigenschaften der Kontakflächen (26) des Behälters reduziert werden;
wobei die Behälter (20) sich im Betrieb entlang der Förderrichtung an dem Wirkmittel (40) vorbei bewegen und sich dabei drehen, wodurch die Kontaktflächen (26) der Behälter (20) an dem Wirkmittel (40) vorbeistreifen.

2. Verwendung einer Vorrichtung nach Anspruch 1, wobei das wenigstens eine Wirkmittel (40) parallel zur Längsachse (X) des behandelten Behälters (20, 20a, 20b) angeordnet ist.

3. Verwendung einer Vorrichtung nach Anspruch 1 oder 2, wobei sich das Wirkmittel (40) weitgehend über die gesamte Höhe (H) des behandelten Behälters (20, 20a, 20b) erstreckt.

4. Verwendung einer Vorrichtung nach einem der Ansprüche 1 bis 3, wobei das Wirkmittel (40) eine Wirkfläche (42) ist.

5. Verwendung einer Vorrichtung nach einem der Ansprüche 1 bis 4, wobei die Vorrichtung (10, 100) ein Drehmittel (50) zur Rotation der Behälter (20, 20a, 20b) um ihre Längsachse (X) aufweist.

6. Verwendung einer Vorrichtung nach einem der Ansprüche 1 bis 5, wobei die Vorrichtung (10, 100) in der Blasmaschine (8) oder in einer weiterverarbeitenden Vorrichtung (12) integriert ist.

7. Verwendung einer Vorrichtung nach wenigstens einem der Ansprüche 1 bis 6, wobei am Förderweg der Behälter gegenüberliegend zwei mit unterschiedlicher Geschwindigkeit antreibbare Endlosförderbändern (152, 153) so angeordnet sind, dass die Behälter dadurch beim Durchlauf in Drehbewegung versetzt werden können, wobei die Endlosförderbänder das wenigstens eine Wirkmittel sind oder wobei ein separates Wirkmittel (40) vorgesehen ist.

## Claims

1. Use of a device for the treatment of a container (20, 20a, 20b) blow-molded from plastic to reduce undesired adhesive properties of contact surfaces of the container,
wherein the container comprises at least a standing surface (22) and a lateral surface (24), wherein the lateral surface (24) is arranged at least partially parallel to a longitudinal axis (X) of the container (20, 20a, 20b) which is perpendicular to the standing surface (22), and wherein the lateral surface (24) comprises at least one contact surface (26), and wherein the contact surfaces (26) of two containers get at least partially into contact with one another in a compact contacting arrangement of the containers (20, 20a, 20b) side by side,
wherein the device (10, 100) comprises at least one active means (40) for changing the physical surface properties of the contact surfaces (26) of the container (20, 20a, 20b), wherein physical properties of the contact surfaces (26) of the container (20, 20a, 20b) are changed by mechanical action of the active means on the contact surfaces (26), so that tacky adhesive properties of the contact surfaces (26) of the container are reduced,
wherein the containers (20) move past the active means (40) along the conveying direction during operation and are thereby rotating, whereby the contact surfaces (26) of the containers (20) swipe past the active means (40).

2. Use of a device according to claim 1, wherein the at least one active means (40) is arranged parallel to the longitudinal axis (X) of the treated container (20, 20a, 20b).

3. Use of a device according to claim 1 or 2, wherein the active means (40) extends substantially over the entire height (H) of the treated container (20, 20a, 20b).

4. Use of a device according to one of claims 1 to 3, wherein the active means (40) is an active surface (42).

5. Use of a device according to one of claims 1 to 4, wherein the device (10, 100) comprises a rotation means (50) for rotating the containers (20, 20a, 20b) about their longitudinal axis (X).

6. Use of a device according to one of claims 1 to 5, wherein the device (10, 100) is integrated into the blow molding machine (8) or in a further-processing apparatus (12).

7. Use of a device according to at least one of claims 1 to 6, wherein two endless conveyor belts (152, 153), which can be driven at different speeds, are arranged opposite each other on the conveying path of the containers in such a way that the containers can thereby be set in rotational movement during passage, wherein the endless conveyor belts are the at least one active means or wherein a separate active means (40) is provided.

## Revendications

1. Utilisation d'un appareil pour traiter un contenant en plastique moulé en biais (20, 20a, 20b) afin de réduire l'adhérence indésirable des surfaces de contact du contenant,
dans lequel le contenant présente au moins une surface d'appui (22) et une surface périphérique (24), dans lequel la surface périphérique (24) est disposée au moins partiellement parallèlement à un axe longitudinal (X) du contenant (20, 20a, 20b) qui est perpendiculaire à la surface d'appui (22), et dans lequel la surface périphérique (24) présente au moins une surface de contact (26), et dans lequel les surfaces de contact (26) de deux contenants viennent au moins partiellement en contact l'une avec l'autre dans un agencement compact et en contact des contenants (20, 20a, 20b) l'un à côté de l'autre;
dans lequel le dispositif (10, 100) comprend au moins un agent actif (40) pour modifier les propriétés physiques des surfaces de contact (26) des contenants (20, 20a, 20b), dans lequel les propriétés physiques des surfaces de contact (26) des contenants (20, 20a, 20b) sont modifiées par l'action mécanique de l'agent actif sur les surfaces de contact (26) de sorte que l'adhérence des surfaces de contact (26) des contenants sont réduites;
dans lequel, en utilisation, les contenants (20) passent devant les moyens de tricotage (40) dans le sens du transport et tournent, ce qui fait que les surfaces de contact (26) des contenants (20) passent devant les moyens de tricotage (40).

2. Utilisation d'un appareil selon la revendication 1, dans lequel le au moins un moyen actif (40) est disposé parallèlement à l'axe longitudinal (X) du contenant traité (20, 20a, 20b).

3. Utilisation d'un dispositif selon les revendications 1 ou 2, dans lequel l'agent actif (40) s'étend sensiblement sur toute la hauteur (H) du contenant traité (20, 20a, 20b).

4. Utilisation d'un dispositif selon l'une des revendications 1 à 3, dans lequel l'agent actif (40) est une surface active (42).

5. Utilisation d'un dispositif selon l'une des revendications 1 à 4, dans lequel le dispositif (10, 100) comporte un moyen de rotation (50) pour faire tourner les contenants (20, 20a, 20b) autour de leur axe longitudinal (X).

6. Utilisation d'un dispositif selon l'une des revendications 1 à 5, le dispositif (10, 100) étant intégré dans la machine de soufflage (8) ou dans un dispositif de traitement ultérieur (12).

7. Utilisation d'un dispositif selon au moins l'une des revendications 1 à 6, dans lequel deux bandes transporteuses sans fin (152, 153) pouvant être entraînées à des vitesses différentes sont disposées l'une en face de l'autre sur le trajet de transport des contenants de telle sorte que les contenants peuvent ainsi être mis en mouvement de rotation lors du passage, les bandes transporteuses sans fin étant ledit au moins un moyen actif ou un moyen actif séparé (40) étant prévu.
